(19) **Europäisches Patentamt / European Patent Office / Office européen des brevets**

(11) **EP 3 644 487 B1**

(12) **EUROPEAN PATENT SPECIFICATION**

(45) Date of publication and mention
of the grant of the patent:
**07.07.2021 Bulletin 2021/27**

(51) Int Cl.:
***H02M 3/158*** *(2006.01)*     *H02M 1/00* *(2006.01)*

(21) Application number: **19154150.7**

(22) Date of filing: **29.01.2019**

(54) **POWER CONVERTER SYSTEM AND COUPLED TWO-STAGE INDUCTOR**

STROMRICHTERSYSTEM UND GEKOPPELTER ZWEISTUFIGER INDUKTOR

SYSTÈME DE CONVERTISSEUR DE PUISSANCE ET INDUCTEUR COUPLÉ À DEUX ÉTAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2018 TW 10738097**

(43) Date of publication of application:
**29.04.2020 Bulletin 2020/18**

(73) Proprietor: **Industrial Technology Research Institute**
**31040 Hsinchu (TW)**

(72) Inventors:
- **Tsai, Wen-Tien**
  **929 Liuqiu Township, Pingtung County (TW)**
- **Chen, Yu-Jen**
  **406 Taichung City (TW)**
- **Abdelmessih, Guirguis Z.**
  **33204 Gijon (ES)**
- **Alonso Alvarez, Jose Marcos**
  **33204 Gijon (ES)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(56) References cited:
**CN-A- 104 753 335**    **US-A- 4 857 822**
**US-B1- 6 304 460**    **US-B1- 8 772 967**

**Description**

TECHNICAL FIELD

The disclosure relates in general to a power converter system and a coupled two-stage inductor.

BACKGROUND

Along with the advance in the technology of electronics, various electronic devices are continuously provided one after another. Since different electronic devices may have different voltage specifications, the power converter system is provided. However, the single-stage power converter system with a high step-down ratio makes the duty ratio of switch decrease. The power converter system has poor performance in terms of accuracy and stability, and is susceptible to noise interference, which decreases power conversion efficiency. Furthermore, the control unit used in the power converter system is more expensive. The CN 104 753 335 A discloses a secondary Buck power factor correction converter. An AC power source is rectified by a rectifier bridge. The output voltage of the rectifier bridge is connected to a LC filter. The positive terminal of the LC filter is connected to the cathode of a second diode and one end of a first inductor. The negative terminal of the LC filter is connected to the anode of a third diode and the source of the switch transistor. The cathode of the third diode is connected to the anode of the second diode, the anode of the fourth diode, and the negative terminal of a first capacitor. The other end of the first inductor is connected to the positive terminal of the first capacitor, the cathode of a fifth diode, and one end of a second inductor. The cathode of a fourth diode is connected to the drain of the switch transistor, the anode of the fifth diode, the negative terminal of the output capacitor, and the negative terminal of the output load. The other end of the second inductor is connected to the positive terminal of the output capacitor and the positive terminal of the output load.

SUMMARY

The disclosure relates to a power converter system and a coupled two-stage inductor. Through circuit optimization integration, one common switch enables two power converting units to perform a charging/discharging procedure with in-phase and same time sequence, not only greatly increasing the step-down ratio and conversion efficiency but also reducing the cost and the volume.

The problem of the present invention is solved by a power converter system according to the independent claim 1. The dependent claims refer to advantageous developments of the present invention. According to one embodiment of the disclosure, a power converter system including a first power converting unit, a second power converting unit and a common switch is provided. The first power converting unit includes a first inductor and a first capacitor. The first inductor is electrically connected to the first capacitor. The second power converting unit includes a second inductor and a second capacitor. The second inductor is electrically connected to the second capacitor. The common switch is electrically connected to the first power converting unit and the second power converting unit. The first power converting unit and the second power converting unit are both operated with the common switch. When the common switch is conducted, the first power converting unit and the second power converting unit perform a two-stage power converting procedure with in-phase and same time sequence.

According to another embodiment of the disclosure, a coupled two-stage inductor including a first structure, a second structure, a first coil and a second coil is provided. The first structure includes a first cylinder, a second cylinder, and a third cylinder interposed between the first cylinder and the second cylinder. The second structure includes a fourth cylinder, a fifth cylinder, and a sixth cylinder interposed between the fourth cylinder and the fifth cylinder. The first structure and the second structure are disposed oppositely, such that the first cylinder and the fourth cylinder are separated by a first gap, the second cylinder and the fifth cylinder are separated by a second gap, and the third cylinder and the sixth cylinder are separated by a third gap. The first coil is winded on the first cylinder and the fourth cylinder. The second coil is winded on the second cylinder and the fifth cylinder.

According to an embodiment of the disclosure, a power converter system including a first power converting unit, a second power converting unit and a common switch is provided. The first power converting unit includes a first inductor and a first capacitor. The first inductor is electrically connected to the first capacitor. The second power converting unit includes a second inductor and a second capacitor. The second inductor is electrically connected to the second capacitor. The common switch is electrically connected to the first power converting unit and the second power converting unit. The first power converting unit and the second power converting unit are both operated with the common switch. When the common switch is conducted, the first power converting unit and the second power converting unit perform a two-stage power converting procedure with in-phase and same time sequence. The first inductor and the second inductor are integrated as a coupled two-stage inductor.

The above and other aspects of the disclosure will become better understood with regard to the following detailed description of the preferred but non-limiting embodiment(s). The following description is made with reference to the accompanying drawings.

BRIEF DESCRIPTION OF THE DRAWINGS

FIG. 1 is a schematic diagram of a power converter system according to an embodiment.

FIGS. 2A to 2D are schematic diagrams of a two-stage power converting procedure of the power converter system of FIG. 1.

FIG. 3A is a schematic diagram of a coupled two-stage inductor according to an embodiment.

FIG. 3B is an equivalent circuit diagram of the coupled two-stage inductor of FIG. 3A.

FIG. 4 is a schematic diagram of the coupled two-stage inductor of FIG. 3A used in the power converter system of FIG. 1.

FIG. 5 is a schematic diagram of a power converter system according to another embodiment.

FIGS. 6A to 6D are schematic diagrams of a two-stage power converting procedure of the power converter system of FIG. 5.

FIG. 7 is a schematic diagram of a power converter system according to another embodiment.

FIGS. 8A to 8D are schematic diagrams of a two-stage power converting procedure of the power converter system of FIG. 7.

FIG. 9 is a schematic diagram of a power converter system according to another embodiment.

FIGS. 10A to 10D are schematic diagrams of a two-stage power converting procedure of the power converter system of FIG. 9.

FIG. 11A is a current chart of the power converter system of FIG. 1.

FIG. 11B is a current chart of the power converter system of FIG. 5.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

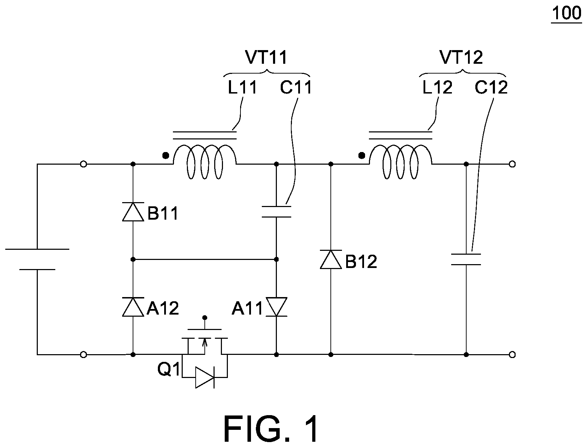

Referring to FIG. 1, a schematic diagram of a power converter system 100 according to an embodiment is shown. In an embodiment as indicated in FIG. 1, the power converter system 100 is a buck-buck power converter system. The power converter system 100 of FIG. 1 includes a first power converting unit VT11, a second power converting unit VT12, a common switch Q1, two charging control diodes A11 and A12 and two converting control diodes B11 and B12. The first power converting unit VT11 is a buck unit. The first power converting unit VT11 includes a first inductor L11 and a first capacitor C11. The first inductor L11 is electrically connected to the first capacitor C11, and, after storing power, the first inductor L11 is able to charge the first capacitor C11. The second power converting unit VT12 is a buck unit. The second power converting unit VT12 includes a second inductor L12 and a second capacitor C12. The second inductor L12 is electrically connected to the second capacitor C12, and, after storing power, the second inductor L12 is able to charge the second capacitor C12.

The common switch Q1 is electrically connected to the first power converting unit VT11 and the second power converting unit VT12. The first power converting unit VT11 and the second power converting unit VT12 are both operated with the common switch Q1. When the common switch Q1 is conducted, the first power converting unit VT11 and the second power converting unit VT12 perform a two-stage power converting procedure with in-phase and same time sequence.

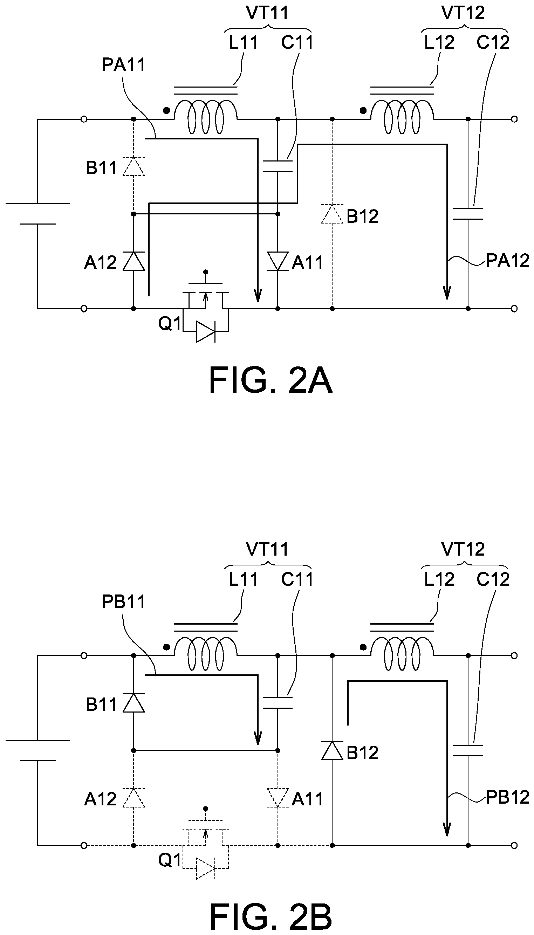

Referring to FIGS. 2A to 2D, schematic diagrams of a two-stage power converting procedure of the power converter system 100 of FIG. 1 are shown. As indicated in FIG. 2A, the charging control diodes A11 and A12 are electrically connected to two ends of the common switch Q1 respectively. When the common switch Q1 is conducted, the charging control diodes A11 and A12 are automatically connected but the converting control diodes B11 and B12 are automatically disconnected to form a first charging loop PA11 and a second charging loop PA12. The first charging loop PA11 is configured to charge the first inductor L11 to store power. The second charging loop PA12 is configured to charge the second inductor L12 to store power.

As indicated in FIG. 2B, the converting control diodes B11 and B12 are electrically connected to an input end of the first inductor L11 and an input end of the second inductor L12 respectively. When the common switch Q1 is not conducted, the converting control diodes B11 and B12 are automatically connected but the charging control diodes A11 and A12 are automatically disconnected to form a first converting loop PB11 and a second converting loop PB12. The first converting loop PB11 enables the first inductor L11 to charge the first capacitor C11. The second converting loop PB12 enables the second inductor L12 to charge the second capacitor C12.

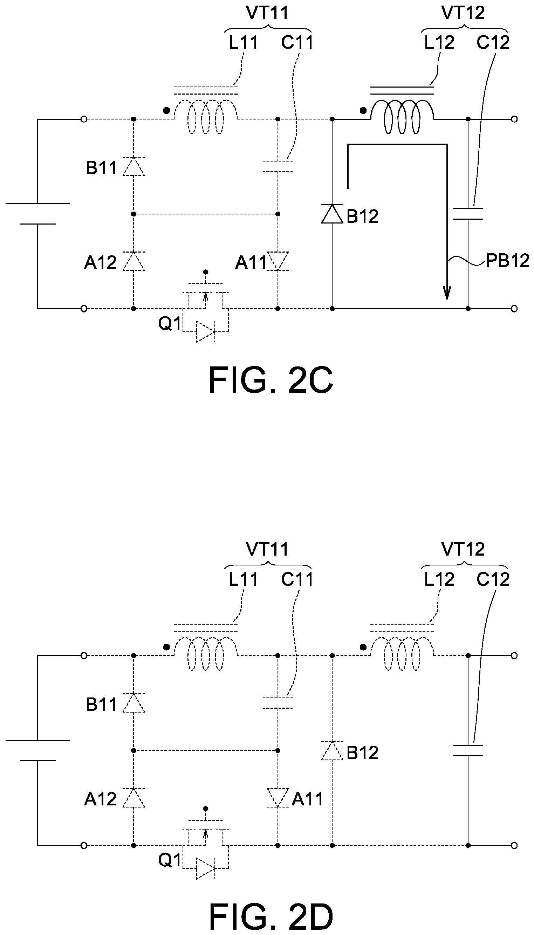

As indicated in FIG. 2C, when the first inductor L11 completes the procedure for charging the first capacitor C11, the converting control diode B11 is automatically disconnected, and only the second converting loop PB12 continues to enable the second inductor L12 to charge the second capacitor C12.

As indicated in FIG. 2D, when the second inductor L12 completes the procedure for charging the second capacitor C12, the converting control diode B12 is automatically disconnected to complete the two-stage power converting procedure.

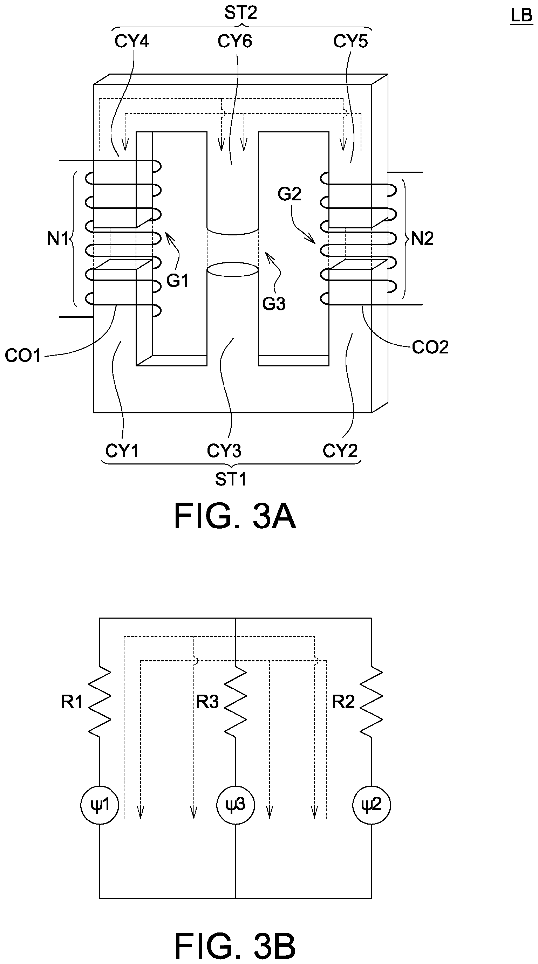

Referring to FIG. 3A, a schematic diagram of a coupled two-stage inductor LB according to an embodiment is shown. In the above embodiments, the coupled two-stage inductor LB can be used to filter the waves in the two loops and suitable allocate the power storage for two times of voltage drop/voltage rise. The coupled two-stage inductor LB includes a first structure ST1, a second structure ST2, a first coil CO1 and a second coil CO2. The first structure ST1 includes a first cylinder CY1, a second cylinder CY2, and a third cylinder CY3 interposed between the first cylinder CY1 and the second cylinder CY2. The first cylinder CY1, the second cylinder CY2 and the third cylinder CY3 are connected by one end, such that the first structure ST1 has an E-shaped appearance. The second structure ST2 includes a fourth cylinder CY4, a fifth cylinder CY5, and a sixth cylinder CY6 interposed between the fourth cylinder CY4 and the fifth cylinder CY5. The fourth cylinder CY4, the fifth cylinder CY5 and the sixth cylinder CY6 are connected by one end, such that the second structure ST2 has an E-shaped appearance. The first structure ST1 and the second structure ST2 are disposed oppositely, such that the first cylinder CY1 corresponds to the fourth cylinder CY4, the second cylinder CY2 corresponds to the fifth cylinder CY5, and the third cylinder CY3 corresponds to the sixth cylinder CY6. The first cylinder CY1 and the fourth cylinder CY4 are separated by a first gap G1. The second cylinder CY2 and the fifth cylinder CY5 are separated by a second gap G2. The third cylinder CY3 and the sixth cylinder CY6 are separated by a third gap G3. The first coil CO1 is winded on the first cylinder CY1 and the fourth cylinder CY4. The second coil CO2 is winded on the second cylinder CY2 and the fifth cylinder CY5. The third cylinder CY3 and the sixth cylinder CY6 are not winded by any coil.

In the present embodiment, all of the first cylinder CY1, the second cylinder CY2, the third cylinder CY3, the fourth cylinder CY4, the fifth cylinder CY5 and the sixth cylinder CY6 are magnetic cylinders. The first gap G1, the second gap G2 and the third gap G3 can be adjusted according to power distribution, therefore the dimensions of the first gap G1, the second gap G2 and the third gap G3 can be different. Besides, the number of windings N1 of the first coil CO1 and the number of windings N2 of the second coil CO2 can also be adjusted according to power distribution, and therefore can be different.

Referring to FIG. 3B, an equivalent circuit diagram of the coupled two-stage inductor LB of FIG. 3A is shown. The first gap G1, the second gap G2 and the third gap G3 respectively form a first magneto-resistance R1, a second magneto-resistance R2 and a third magneto-resistance R3. The coupled two-stage inductor LB can obtain the inductance of the first inductor L11 and the inductance of the second inductor L12 using the following equations (1) and (2).

$$\text{inductance of the first inductor L11} = F1(\emptyset 1, N1) + F3(\emptyset 3)\dots\dots\dots\dots\dots \text{(1)}$$

$$\text{inductance of the second inductor L12} = F2(\emptyset 2, N2) + F3(\emptyset 3)\dots\dots\dots\dots \text{(2)}$$

That is, the first magnetic flux $\emptyset 1$, the second magnetic flux $\emptyset 2$, the third magnetic flux $\emptyset 3$ can be correspondingly adjusted through the adjustment of the first gap G1, the second gap G2 and the third gap G3. Then, suitable first inductor L11 and second inductor L12 can be designed according to the number of windings N1 and the number of windings N2.

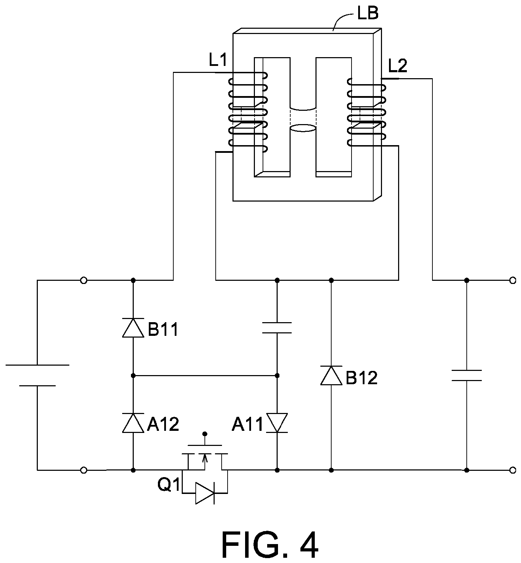

Referring to FIG. 4, a schematic diagram of the coupled two-stage inductor of FIG. 3A used in the power converter system of FIG. 1 is shown. The first inductor L11 and the second inductor L12 can be integrated as a coupled two-stage inductor LB. Based on the requirement of the power converter system, one coupled two-stage inductor LB corresponding to the first inductor L11 and the second inductor L12 can be designed. Since the coupled two-stage inductor LB provides the function of two inductors (that is, the first inductor L11 and the second inductor L12), the design of the two-stage power converter system can be simplified.

According to the design of the above embodiments, the first charging loop PA11 and the second charging loop PA12 can be controlled by the same common switch Q1. In comparison to the single-stage power converter system, the power converter system 100 of the present embodiment can increase the step-down ratio by more than 4 times, and therefore can be used in the vehicle power of the power converter system which requires a high step-down ratio. In comparison to the existing dual-stage power converter system, the efficiency of the power converter system 100 of the present embodiment is increased by more than 10%, and the cost and the volume are reduced by more than 30% and more than 40%, respectively.

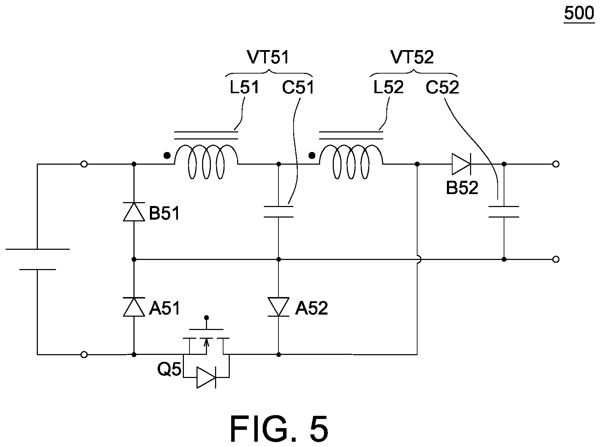

The design of the above embodiments can also be used in other embodiments. Referring to FIG. 5, a schematic diagram of a power converter system 500 according to another embodiment is shown is shown. In an embodiment as indicated in FIG. 5, the power converter system 500 is a buck-boost power converter system. The power converter system 500 of FIG. 5 includes a first power converting unit VT51, a second power converting unit VT52, a common switch Q5, two charging control diodes A51 and A52 and two converting control diodes B51 and B52. The first power converting unit VT51 is a buck unit. The first power converting unit VT51 includes a first inductor L51 and a first capacitor C51. The first inductor L51 is electrically connected to the first capacitor C51, and, after storing power, the first inductor L51 is able to charge the first capacitor C51. The second power converting unit VT52 is a boost unit. The second power converting unit VT52 includes a second inductor L52 and a second capacitor C52. The second inductor L52 is electrically connected to the second capacitor C52, and, after storing power, the second inductor L52 is able to charge the second capacitor C52.

The common switch Q5 is electrically connected to the first power converting unit VT51 and the second power converting unit VT52. The first power converting unit VT51 and the second power converting unit VT52 are both operated with the common switch Q5. When the common switch Q5 is conducted, the first power converting unit VT51 and the second power converting unit VT52 perform a two-stage power converting procedure with in-phase and same time sequence.

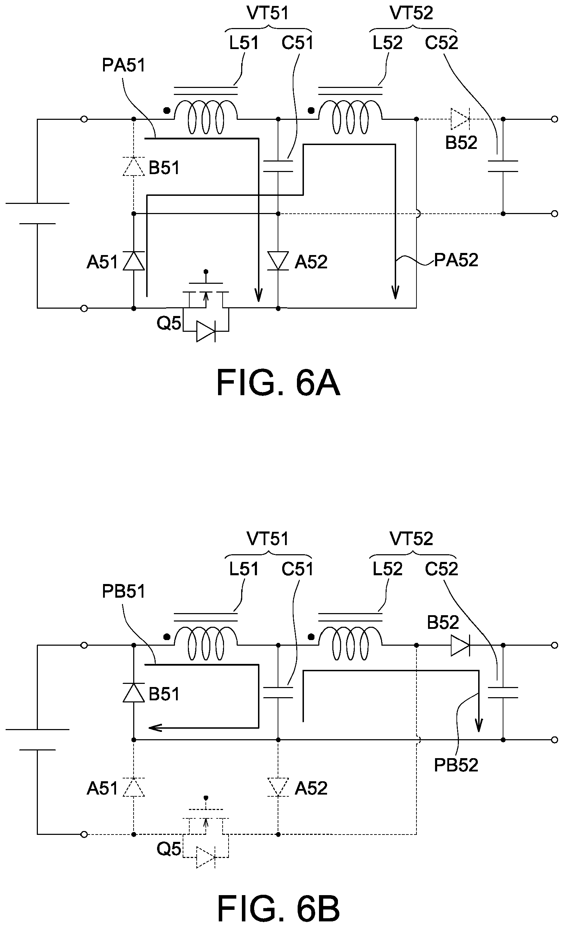

Referring to FIGS. 6A to 6D, schematic diagrams of a two-stage power converting procedure of the power converter system 500 of FIG. 5 are shown. As indicated in FIG. 6A, the charging control diodes A51 and A52 are electrically connected to two ends of the common switch Q5 respectively. When the common switch Q5 is conducted, the charging control diodes A51 and A52 are automatically connected but the converting control diodes B51 and B52 are automatically disconnected to form a first charging loop PA51 and a second charging loop PA52. The first charging loop PA51 is configured to charge the first inductor L51 to store power. The second charging loop PA52 is configured to charge the second inductor L52 to store power.

As indicated in FIG. 6B, the converting control diodes B51 and B52 are electrically connected to an input end of the first inductor L51 and an output end of the second inductor L52 respectively. When the common switch Q5 is not conducted, the converting control diodes B51 and B52 are automatically connected but the charging control diodes A51 and A52 are automatically disconnected to form a first converting loop PB51 and a second converting loop PB52. The first converting loop PB51 enables the first inductor L51 to charge the first capacitor C51. The second converting loop PB52 enables the second inductor L52 to charge the second capacitor C52.

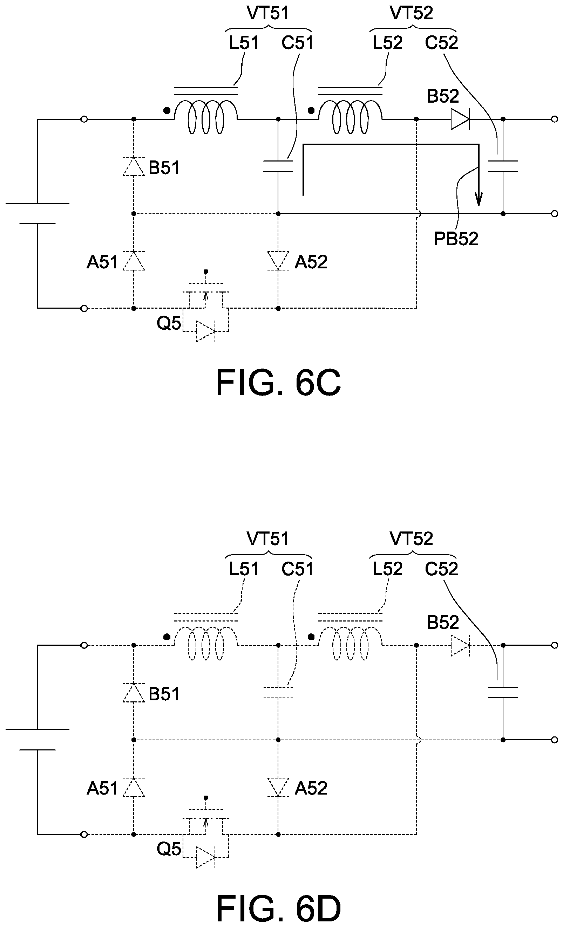

As indicated in FIG. 6C, when the first inductor L51 completes the procedure for charging the first capacitor C51, the converting control diode B51 is automatically disconnected, and only the second converting loop PB52 continues to enable the second inductor L52 to charge the second capacitor C52.

As indicated in FIG. 6D, when the second inductor L52 completes the procedure for charging the second capacitor C52, the converting control diode B52 is automatically disconnected to complete the two-stage power converting procedure.

It should be noted that the coupled two-stage inductor LB of FIG. 3A and FIG. 3B can also be used in the buck-boost power converter system 500 of FIG. 5. The design parameters of the first inductor L51 and the second inductor L52 are similar to that of the above design and the similarities are not repeated here.

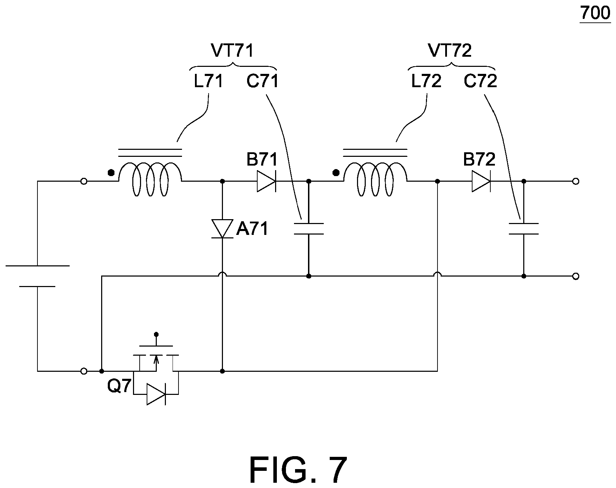

Referring to FIG. 7, a schematic diagram of a power converter system 700 according to another embodiment is shown. In an embodiment as indicated in FIG. 7, the power converter system 700 is a boost-boost power converter system. The power converter system 700 of FIG. 7 includes a first power converting unit VT71, a second power converting unit VT72, a common switch Q7, a charging control diode A71 and two converting control diodes B71 and B72. The first power converting unit VT71 is a boost unit. The first power converting unit VT71 includes a first inductor L71 and a first capacitor C71. The first inductor L71 is electrically connected to the first capacitor C71, and, after storing power, the first inductor L71 is able to charge the first capacitor C71. The second power converting unit VT72 is a boost unit. The second power converting unit VT72 includes a second inductor L72 and a second capacitor C72. The second inductor L72 is electrically connected to the second capacitor C72, and, after storing power, the second inductor L72 is able to charge the second capacitor C72.

The common switch Q7 is electrically connected to the first power converting unit VT71 and the second power converting unit VT72. The first power converting unit VT71 and the second power converting unit VT72 are both operated with the common switch Q7. When the common switch Q7 is conducted, the first power converting unit VT71 and the second power converting unit VT72 perform a two-stage power converting procedure with in-phase and same time sequence.

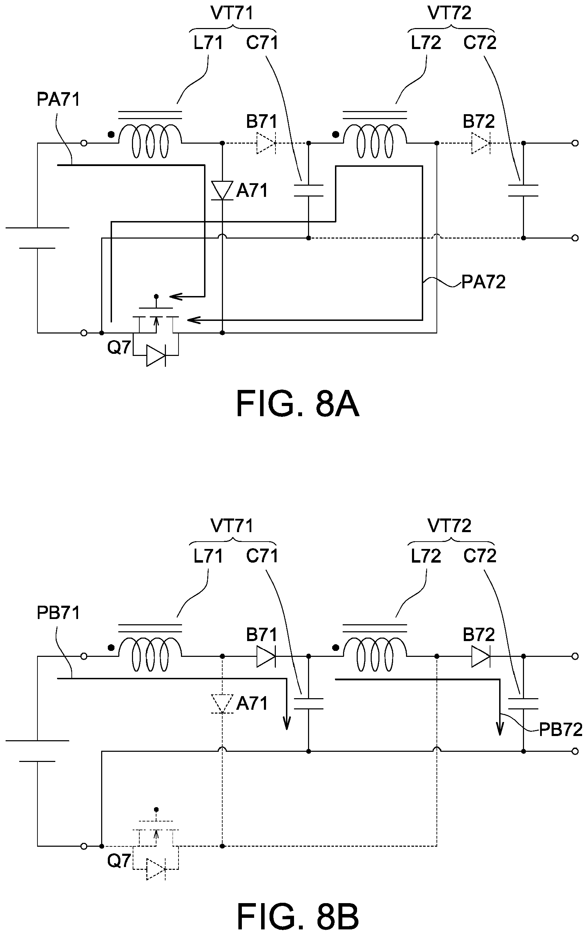

Referring to FIGS. 8A to 8D, schematic diagrams of a two-stage power converting procedure of the power converter system 700 of FIG. 7 are shown. As indicated in FIG. 8A, the charging control diode A71 is electrically connected to one end of the common switch Q7. When the common switch Q7 is conducted, the charging control diode A71 are automatically connected but the converting control diodes B71 and B72 are automatically disconnected to form a first charging loop PA71 and a second charging loop PA72. The first charging loop PA71 is configured to charge the first inductor L71 to store power. The second charging loop PA72 is configured to charge the second inductor L72 to store power.

As indicated in FIG. 8B, the converting control diodes B71 and B72 are electrically connected to an output end of the first inductor L71 and an output end of the second inductor L72 respectively. When the common switch Q7 is not conducted, the converting control diodes B71 and B72 are automatically connected but the charging control diode A71 are automatically disconnected to form a first converting loop PB71 and a second converting loop PB72. The first converting loop PB71 enables the first inductor L71 to charge the first capacitor C71. The second converting loop PB72 enables the second inductor L72 to charge the second capacitor C72.

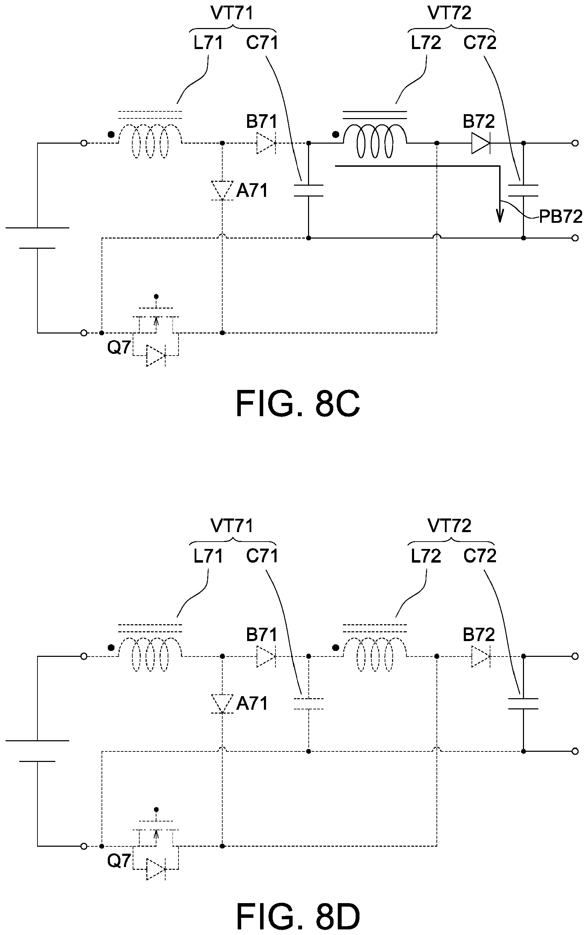

As indicated in FIG. 8C, when the first inductor L71 completes the procedure for charging the first capacitor C71, the converting control diode B71 is automatically disconnected, and only the second converting loop PB72 continues to enable the second inductor L72 to charge the second capacitor C72.

As indicated in FIG. 8D, when the second inductor L72 completes the procedure for charging the second capacitor C72, the converting control diode B72 is automatically disconnected to complete the two-stage power converting procedure.

It should be noted that the coupled two-stage inductor LB of FIG. 3A and FIG. 3B can also be used in the boost-boost power converter system 700 of FIG. 7. The design parameters of the first inductor L71 and the second inductor L72. The design parameters of the first inductor L51 and the second inductor L52 are similar to that of the above design and the similarities are not repeated here.

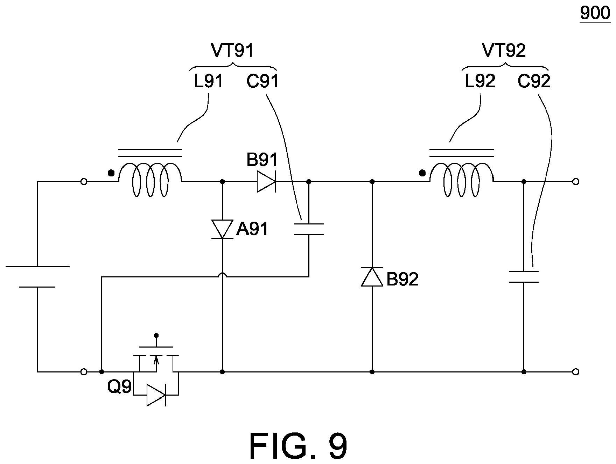

Referring to FIG. 9, a schematic diagram of a power converter system 900 according to another embodiment is shown. In an embodiment as indicated in FIG. 9, the power converter system 900 is a boost-buck power converter system. The power converter system 900 of FIG. 9 includes a first power converting unit VT91, a second power converting unit VT92, a common switch Q9, a charging control diode A91 and two converting control diodes B91 and B92. The first power converting unit VT91 is a boost unit. The first power converting unit VT91 includes a first inductor L91 and a first capacitor C91. The first inductor L91 is electrically connected to the first capacitor C91, and, after storing power, the first inductor L91 is able to charge the first capacitor C91. The second power converting unit VT92 is a buck unit. The second power converting unit VT92 includes a second inductor L92 and a second capacitor C92. The second inductor L92 is electrically connected to the second capacitor C92, and, after storing power, the second inductor L92 is able to charge the second capacitor C92.

The common switch Q9 is electrically connected to the first power converting unit VT91 and the second power converting unit VT92. The first power converting unit VT91 and the second power converting unit VT92 are both operated with the common switch Q9. When the common switch Q9 is conducted, the first power converting unit VT91 and the second power converting unit VT92 perform a two-stage power converting procedure with in-phase and same time sequence.

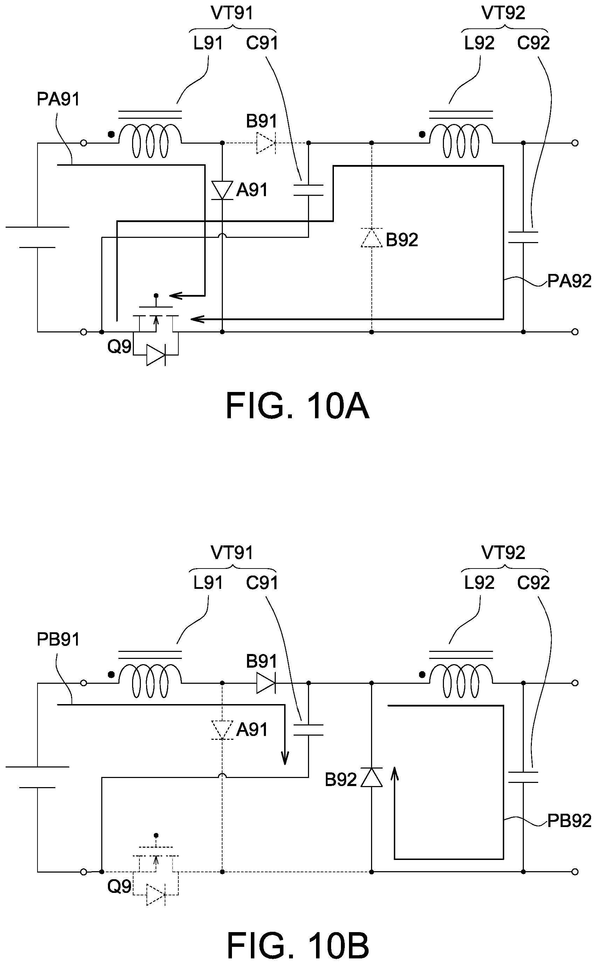

Referring to FIGS. 10A to 10D, schematic diagrams of a two-stage power converting procedure of the power converter system 900 of FIG. 9 are shown. As indicated in FIG. 10A, the charging control diode A91 is electrically connected to one end of the common switch Q9. When the common switch Q9 is conducted, the charging control diode A91 are automatically connected but the converting control diodes B91 and B92 are automatically disconnected to form a first charging loop PA91 and a second charging loop PA92. The first charging loop PA91 is configured to charge the first inductor L91 to store power, the second charging loop PA92 is configured to charge the second inductor L92 to store power.

As indicated in FIG. 10B, the converting control diodes B91 and B92 are electrically connected to an output end of the first inductor L91 and an input end of the second inductor L92 respectively. When the common switch Q9 is not conducted, the converting control diodes B91 and B92 are automatically connected but the charging control diode A91 are automatically disconnected to form a first converting loop PB91 and a second converting loop PB92. The first converting loop PB91 enables the first inductor L91 to charge the first capacitor C91. The second converting loop PB92 enables the second inductor L92 to charge the second capacitor C92.

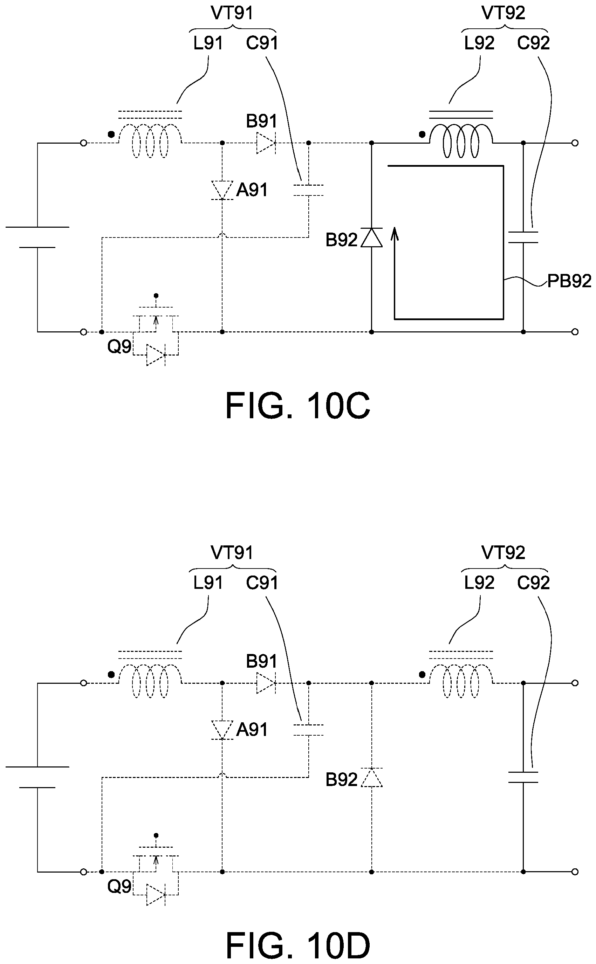

As indicated in FIG. 10C, when the first inductor L91 completes the procedure for charging the first capacitor C91, the converting control diode B91 is automatically disconnected, and only the second converting loop PB92 continues to enable the second inductor L92 to charge the second capacitor C92.

As indicated in FIG. 10D, when the second inductor L92 completes the procedure for charging the second capacitor C92, the converting control diode B92 is automatically disconnected to complete the two-stage power converting procedure.

It should be noted that the coupled two-stage inductor LB of FIG. 3A and FIG. 3B can also be used in the boost-buck power converter system 900 of FIG. 9. The design parameters of the first inductor L91 and the second inductor L92 are similar to that of the above design and are not repeated here.

In the power converter systems 100, 500, 700 and 900 of the above embodiments, through circuit optimization and integration, the source of the common switches Q1, Q5, Q7 and Q9 shares the ground with the input voltage, such that the drive signal does not need to be isolated and the circuit cost can be reduced.

Besides, the power converter systems 100, 500, 700 and 900 further use the charging control diodes A11 and A12, A51, A52, A71 and A91 to form the first charging loops PA11, PA51, PA71 and PA91 and the second charging loop PA12, PA52, PA72 and PA92. The power converter systems 100, 500, 700 and 900 further use the converting control diodes B11 and B12, B51, B52, B71, B72, B91 and B92 to form the first converting loops PB11, PB51, PB71 and PB91 and the second converting loop PB12, PB52, PB72 and PB92. Thus, the first power converting units VT11, VT51, VT71 and VT91 and the second power converting units VT12, VT52, VT72 and VT92 can concurrently perform a charging/discharging procedure with in-phase and same time sequence.

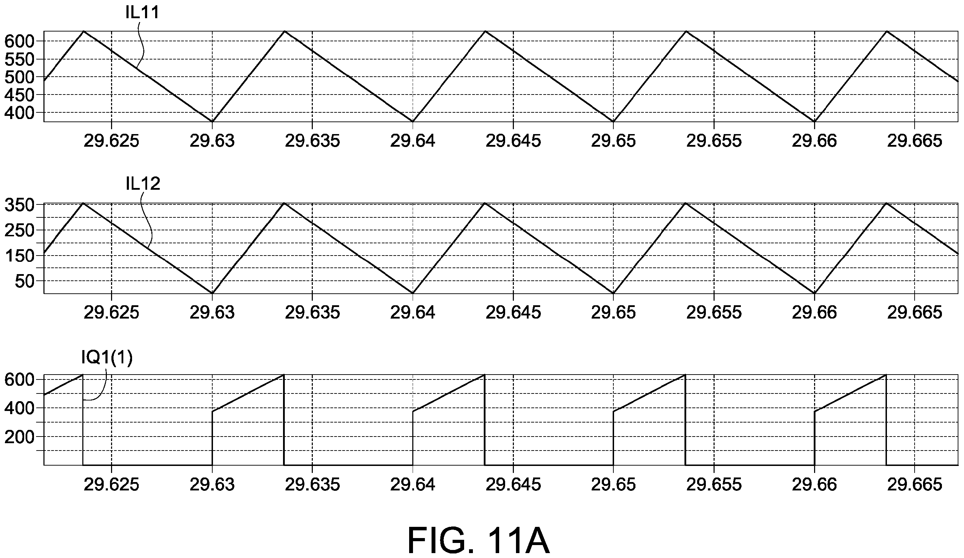

Referring to FIG. 11A, a current chart of the power converter system 100 of FIG. 1 is shown. In the power converter system 100, the first power converting unit VT11 and the second power converting unit VT12 are both operated with the same common switch Q1, and therefore have only one time sequence. Also, in the power converter system 100, the first power converting unit VT11 and the second power converting unit VT12 are both operated with the same common switch Q1, therefore the first inductor L11 and the second inductor L12 can be charged at the same time. When the common switch Q1 is conducted, the current curve IQ1(1) of the common switch Q1 shows that there are electric currents passing through the common switch Q1. A comparison of current curves IL11 and IL12 shows that the two inductors have the same current, such that the first power converting unit VT11 and the second power converting unit VT12 can perform a charging/discharging procedure with in-phase and same time sequence.

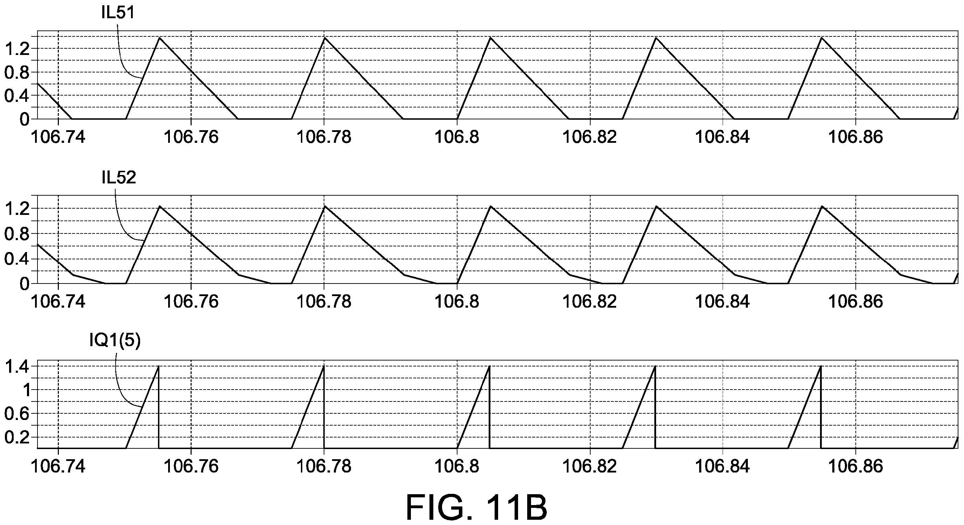

Referring to FIG. 11B, a current chart of the power converter system 500 of FIG. 5 is shown. In the power converter system 500, the first power converting unit VT51 and the second power converting unit VT52 are both operated with the same common switch Q1, and therefore have only one time sequence. Moreover, in the power converter system 500, the first power converting unit VT51 and the second power converting unit VT52 are both operated with the same common switch Q1, therefore the first inductor L51 and the second inductor L52 can be charged at the same time. When the common switch Q1 is conducted, the current curve IQ1(5) of the common switch Q1 shows that there are electric currents passing through the current curve IQ1(5). A comparison of the current curves IL51 and IL52 shows that the two inductors have the same current, such that the first power converting unit VT51 and the second power converting unit VT522 can perform a charging/discharging procedure with in-phase and same time sequence.

The current charts of the power converter systems 700 and 900 are similar to the current chart of the power converter system 500. The power converter systems 700 and 900 both have the feature of in-phase and same time sequence, and the similarities are not repeated here.

**Claims**

1. A power converter system (100, 500, 700, 900), wherein the power converter system (100, 500, 700, 900) comprises:

a first DC-DC power converting unit (VT11, VT51, VT71, VT91), comprising a first inductor (L11, L51, L71, L91) and a first capacitor (C11, C51, C71, C91), wherein the first inductor (L11, L51, L71, L91) has a first terminal and a second terminal, and the second terminal of the first inductor (L11, L51, L71, L91) is electrically connected to a first terminal of the first capacitor (C11 C51, C71, C91) directly or via a first converting control diode (B71, B91);
a second DC-DC power converting unit (VT12, VT52, VT72, VT92), comprising a second inductor (L12, L52, L72, L92) and a second capacitor (C12, C52, C72, C92), wherein the second terminal of the first inductor (L11, L51, L71, L91) is electrically connected to a first terminal of the second inductor (L12, L52, L72, L92) directly or via the first converting control diode (B71, B91), the first terminal of the first capacitor (C11, C51, C71, C91) is connected to the first terminal of the second inductor (L12, L52, L72, L92), and a second terminal of the second inductor (L12, L52, L72, L92) is electrically connected to a first terminal of the second capacitor (C12, C52, C72, C92) directly or via a second converting control diode (B52, B72); and

a common switch (Q1, Q5, Q7, Q9) electrically connected to the first power converting unit (VT11, VT51, VT71, VT91) and the second power converting unit (VT12, VT52, VT72, VT92), wherein the power converter system is configured to be operable solely by operating the common switch (Q1, Q5, Q7, Q9), and when the common switch (Q1, Q5, Q7, Q9) is conducted, the first power converting unit (VT11, VT51, VT71, VT91) and the second power converting unit (VT12, VT52, VT72, VT92) perform a two-stage power converting procedure with in-phase and same time sequence,

wherein either

a first terminal of the common switch (Q1) is electrically connected to a second terminal of the first capacitor (C11) via a first charging control diode (A12), the second terminal of the first capacitor (C11) is electrically connected to a second terminal of the common switch (Q1) via a second charging control diode (A11), and the second terminal of the common switch (Q1) is electrically connected to a second terminal of the second capacitor (C12), or

a first terminal of the common switch (Q5) is electrically connected to a second terminal of the first capacitor (C51) via a first charging control diode (A51), the second terminal of the first capacitor (C51) is electrically connected to a second terminal of the common switch (Q5) via a second charging control diode (A52), and the second terminal of the common switch (Q5) is electrically connected to the second terminal of the second inductor (L52), or

a second terminal of the first capacitor (C71) and a second terminal of the second capacitor (C72) are electrically connected to a first terminal of the common switch (Q7), and the second terminal of the first inductor (L71) is electrically connected to a second terminal of the common switch (Q7) via a charging control diode (A71), or

a first terminal of the common switch (Q9) is electrically connected to a second terminal of the first capacitor (C91), a second terminal of the common switch (Q9) is electrically connected to a second terminal of the second capacitor (C92), and the second terminal of the first inductor (L91) is electrically connected to the second terminal of the common switch (Q9) via a charging control diode (A91),

**characterized in that**

the first inductor (L11, L51, L71, L91) and the second inductor (L12, L52, L72, L92) are integrated as a coupled two-stage inductor, and the coupled two-stage inductor comprises:

> a first structure (ST1), comprising:
>
>> a first cylinder (CY1);
>> a second cylinder (CY2); and
>> a third cylinder (CY3) interposed between the first cylinder (CY1) and the second cylinder (CY2);
>
> a second structure (ST2), comprising:
>
>> a fourth cylinder (CY4);
>> a fifth cylinder (CY5); and
>> a sixth cylinder (CY6) interposed between the fourth cylinder (CY4) and the fifth cylinder (CY5), wherein the first structure (ST1) and the second structure (ST2) are disposed oppositely, such that the first cylinder (CY1) and the fourth cylinder (CY4) are separated by a first gap (G1), the second cylinder (CY2) and the fifth cylinder (CY5) are separated by a second gap (G2), and the third cylinder (CY3) and the sixth cylinder (CY6) are separated by a third gap (G3);
>
> a first coil (CO1) winded on the first cylinder (CY1) and the fourth cylinder (CY4); and
> a second coil (CO2) winded on the second cylinder (CY2) and the fifth cylinder (CY5);
> wherein that the first structure (ST1) has an E-shaped appearance and the second structure (ST2) has an E-shaped appearance.

2. The power converter system (100) according to claim 1, wherein the first power converting unit (VT11) is a buck unit, the second power converting unit (VT12) is a buck unit.

3. The power converter system (500) according to claim 1, wherein the first power converting unit (VT51) is a buck unit, the second power converting unit (VT52) is a boost unit.

4. The power converter system (700) according to claim 1, wherein the first power converting unit (VT71) is a boost unit, the second power converting unit (VT72) is a boost unit.

5. The power converter system (900) according to claim 1, wherein the first power converting unit (VT91) is a boost unit, the second power converting unit (VT92) is a buck unit.

6. The power converter system (100) according to claim 1, wherein the first power converting unit (VT11) is a buck unit, the second power converting unit (VT12) is a buck unit, and two converting control diodes (B11, B12) are electrically connected to an input end of the first inductor (L11) and an input end of the second inductor (L12), respectively.

7. The power converter system (500) according to claim 1, wherein the first power converting unit (VT51) is a buck unit, the second power converting unit (VT52) is a boost unit, and one converting control diode (B51) is electrically connected to an input end of the first inductor (L51) and the second converting control diode (B52) is connected between the second terminal of the second inductor and the first terminal of the second capacitor.

8. The power converter system (900) according to claim 1, wherein the first power converting unit (VT91) is a boost unit, the second power converting unit (VT92) is a buck unit, and a third converting control diode (B92) is electrically connected to an input end of the second inductor (L92) and the first converting control diode (B91) is connected between the second terminal of the first inductor on one side and the first terminal of the first capacitor and the first terminal of the second inductor on the other side.

9. The power converter system (100, 500, 700, 900) according to anyone of the claims 1 to 8, wherein all of the first cylinder (CY1), the second cylinder (CY2), the third cylinder (CY3), the fourth cylinder (CY4), the fifth cylinder (CY5) and the sixth cylinder (CY6) are magnetic cylinders.

10. The power converter system (100, 500, 700, 900) according to anyone of the claims 1 to 9, wherein the number of windings of the first coil (C01) and the number of windings of the second coil (CO2) are different.

11. The power converter system (100, 500, 700, 900) according to anyone of the claims 1 to 10, wherein the dimensions of the first gap (G1), the second gap (G2) and the third gap (G3) are different.

**Patentansprüche**

1. Stromwandlersystem (100, 500, 700, 900), wobei das Stromwandlersystem (100, 500, 700, 900) aufweist:

eine erste DC-DC-Stromwandlereinheit (VT11, VT51, VT71, VT91), die einen ersten Induktor (L11, L51, L71, L91) und einen ersten Kondensator (C11, C51, C71, C91) aufweist, wobei der erste Induktor (L11, L51, L71, L91) einen ersten Anschluss und einen zweiten Anschluss hat, und wobei der zweite Anschluss des ersten Induktors (L11, L51, L71, L91) mit einem ersten Anschluss des ersten Kondensators (C11, C51, C71, C91) direkt oder über eine erste Wandlersteuerdiode (B71, B91) elektrisch verbunden ist;
eine zweite DC-DC-Stromwandlereinheit (VT12, VT52, VT72, VT92), die einen zweiten Induktor (L12, L52, L72, L92) und einen zweiten Kondensator (C12, C52, C72, C92) aufweist, wobei der zweite Anschluss des ersten Induktors (L11, L51, L71, L91) mit einem ersten Anschluss des zweiten Induktors (L12, L52, L72, L92) direkt oder über die erste Wandlersteuerdiode (B71, B91) elektrisch verbunden ist, wobei der erste Anschluss des ersten Kondensators (C11, C51, C71, C91) mit dem ersten Anschluss des zweiten Induktors (L12, L52, L72, L92) verbunden ist, und wobei ein zweiter Anschluss des zweiten Induktors (L12, L52, L72, L92) mit einem ersten Anschluss des zweiten Kondensators (C12, C52, C72, C92) direkt oder über eine zweite Wandlersteuerdiode (B52, B72) elektrisch verbunden ist; und
einen gemeinsamen Schalter (Q1, Q5, Q7, Q9), der elektrisch mit der ersten Stromwandlereinheit (VT11, VT51, VT71, VT91) und der zweiten Stromwandlereinheit (VT12, VT52, VT72, VT92) verbunden ist, wobei das Stromwandlersystem so ausgestaltet ist, dass es nur durch ein Betätigen des gemeinsamen Schalters (Q1, Q5, Q7, Q9) betrieben werden kann, und wenn der gemeinsame Schalter (Q1, Q5, Q7, Q9) ausgeführt wird, führen die erste Stromwandlereinheit (VT11, VT51, VT71, VT91) und die zweite Stromwandlereinheit (VT12, VT52, VT72, VT92) ein Verfahren einer zweistufigen Stromwandlung mit einer gleichphasigen und gleichzeitigen Abfolge durch, wobei entweder
ein erster Anschluss des gemeinsamen Schalters (Q1) über eine erste Ladesteuerungsdiode (A12) mit einem zweiten Anschluss des ersten Kondensators (C11) elektrisch verbunden ist, wobei der zweite Anschluss des ersten Kondensators (C11) mit einem zweiten Anschluss des gemeinsamen Schalters (Q1) über eine zweite Ladesteuerungsdiode (A11) elektrisch verbunden ist, und wobei der zweite Anschluss des gemeinsamen Schalters (Q1) mit einem zweiten Anschluss des zweiten Kondensators (C12) elektrisch verbunden ist, oder wobei ein erster Anschluss des gemeinsamen Schalters (Q5) über eine erste Ladesteuerungsdiode (A51) mit einem zweiten Anschluss des ersten Kondensators (C51) elektrisch verbunden ist, wobei der zweite Anschluss des ersten Kondensators (C51) mit einem zweiten Anschluss des gemeinsamen Schalters (Q5) über eine zweite Ladesteuerungsdiode (A52) elektrisch verbunden ist, und wobei der zweite Anschluss des gemeinsamen Schalters (Q5) mit dem zweiten Anschluss des zweiten Induktors (L52) elektrisch verbunden ist, oder wobei ein zweiter Anschluss des ersten Kondensators (C71) und ein zweiter Anschluss des zweiten Kondensators (C72) mit einem ersten Anschluss des gemeinsamen Schalters (Q7) elektrisch verbunden sind, und wobei der zweite Anschluss des ersten Induktors (L71) über eine Ladesteuerungsdiode (A71) mit einem zweiten Anschluss des gemeinsamen Schalters (Q7) elektrisch verbunden ist, oder wobei ein erster Anschluss des gemeinsamen Schalters (Q9) mit einem zweiten Anschluss des ersten Kondensators (C91) elektrisch verbunden ist, wobei ein zweiter Anschluss des gemeinsamen Schalters (Q9) mit einem zweiten Anschluss des zweiten Kondensators (C92) elektrisch verbunden ist, und wobei der zweite Anschluss des ersten Induktors (L91) über eine Ladesteuerungsdiode (A91) mit dem zweiten Anschluss des gemeinsamen Schalters (Q9) elektrisch verbunden ist; **dadurch gekennzeichnet, dass** der erste Induktor (L11, L51, L71, L91) und der zweite Induktor (L12, L52, L72, L92) als ein verbundener zweistufiger Induktor integriert sind, und dass der verbundene zweistufige Induktor aufweist:

eine erste Struktur (ST1), die aufweist:

einen ersten Zylinder (CY1);
einen zweiten Zylinder (CY2); und
einen dritten Zylinder (CY3), der zwischen dem ersten Zylinder (CY1) und dem zweiten Zylinder (CY2) angeordnet ist;

eine zweite Struktur (ST2), die aufweist:

einen vierten Zylinder (CY4);
einen fünften Zylinder (CY5); und
einen sechsten Zylinder (CY6), der zwischen dem vierten Zylinder (CY4) und dem fünften Zylinder (CY5) angeordnet ist, wobei die erste Struktur (ST1) und die zweite Struktur (ST2) entgegengesetzt so angeordnet sind, dass der erste Zylinder (CY1) und der vierte Zylinder (CY4) durch einen ersten Spalt (G1) getrennt sind, dass der zweite Zylinder (CY2) und der fünfte Zylinder (CY5) durch einen zweiten Spalt (G2) getrennt sind, und dass der dritte Zylinder (CY3) und der sechste Zylinder (CY6) durch einen dritten Spalt (G3) getrennt sind;

eine erste Spule (CO1), die auf den ersten Zylinder (CY1) und den vierten Zylinder (CY4) gewickelt ist; und
eine zweite Spule (CO2), die auf den zweiten Zylinder (CY2) und den fünften Zylinder (CY5) gewickelt ist; wobei die erste Struktur (ST1) ein E-förmiges Aussehen aufweist und die zweite Struktur (ST2) ein E-förmiges Aussehen aufweist.

2. Stromwandlersystem (100) nach Anspruch 1, wobei die erste Stromwandlereinheit (VT11) eine Abwärtseinheit ist und die zweite Stromwandlereinheit (VT12) eine Abwärtseinheit ist.

3. Stromwandlersystem (500) nach Anspruch 1, wobei die erste Stromwandlereinheit (VT51) eine Abwärtseinheit ist, während die zweite Stromwandlereinheit (VT52) eine Verstärkungseinheit ist.

4. Stromwandlersystem (700) nach Anspruch 1, wobei die erste Stromwandlereinheit (VT71) eine Verstärkungseinheit ist und die zweite Stromwandlereinheit (VT72) eine Verstärkungseinheit ist.

5. Stromwandlersystem (900) nach Anspruch 1, wobei die erste Stromwandlereinheit (VT91) eine Abwärtseinheit ist.

6. Stromwandlersystem (100) nach Anspruch 1, wobei die erste Stromwandlereinheit (VT11) eine Abwärtseinheit ist und die zweite Stromwandlereinheit (VT12) eine Abwärtseinheit ist und wobei die zwei zweiten Wandlersteuerdioden (B11, B12) elektrisch mit einem Eingangsende des ersten Induktors (L11) bzw. einem Eingangsende des zweiten Induktors (L12) verbunden sind.

7. Stromwandlersystem (500) nach Anspruch 1, wobei die erste Stromwandlereinheit (VT51) eine Abwärtseinheit ist, während die zweite Stromwandlereinheit (VT52) eine Verstärkungseinheit ist und wobei die eine Wandlersteuerdiode (B51) elektrisch mit einem Eingangsende des ersten Induktors (L51) verbunden ist und wobei die zweite Wandlersteuerdiode (B52) zwischen dem zweiten Anschluss des zweiten Induktors und dem ersten Anschluss des zweiten Kondensators geschaltet ist.

8. Stromwandlersystem (900) nach Anspruch 1, wobei die erste Stromwandlereinheit (VT91) eine Verstärkungseinheit ist, während die zweite Stromwandlereinheit (VT92) eine Abwärtseinheit ist und wobei eine dritte Stromwandlereinheit (B92) mit einem Eingangsende des zweiten Induktors (L92) elektrisch verbunden ist und wobei die erste Wandlersteuerdiode (B91) zwischen dem zweiten Anschluss des ersten Induktors und dem ersten Anschluss des ersten Induktors und dem ersten Anschluss des zweiten Induktors auf der anderen Seite geschaltet ist.

9. Stromwandlersystem (100, 500, 700, 900) nach einem der Ansprüche 1 bis 8, wobei alle von dem ersten Zylinder (CY1), dem zweiten Zylinder (CY2), dem dritten Zylinder (CY3), dem vierten Zylinder (CY4), dem fünften Zylinder (CY5) und dem sechsten Zylinder (CY6) Magnetzylinder sind.

10. Stromwandlersystem (100, 500, 700, 900) nach einem der Ansprüche 1 bis 9, wobei die Anzahl der Wicklungen der ersten Spule (CO1) und die Anzahl der Wicklungen der zweiten Spule (CO2) verschieden sind.

11. Stromwandlersystem (100, 500, 700, 900) nach einem der Ansprüche 1 bis 10, wobei die Abmessungen des ersten Spaltes (G1), des zweiten Spaltes (G2) und des dritten Spaltes (G3) verschieden sind.

**Revendications**

1. Système de convertisseur de puissance (100, 500, 700, 900), dans lequel le système de convertisseur de puissance (100, 500, 700, 900) comprend :

   une première unité de conversion de puissance DC-DC (VT11, VT51, VT71, VT91), comprenant un premier inducteur (L11, L51, L71, L91) et un premier condensateur (C11, C51, C71, C91), dans lequel le premier inducteur (L11, L51, L71, L91) a une première borne et une seconde borne, et la seconde borne du premier inducteur (L11, L51, L71, L91) est connectée électriquement à une première borne du premier condensateur (C11, C51, C71, C91) directement ou via une première diode de commande de conversion (B71, B91) ;
   une seconde unité de conversion de puissance DC-DC (VT12, VT52, VT72, VT92), comprenant un second inducteur (L12, L52, L72, L92) et un second condensateur (C12, C52, C72, C92), dans lequel la seconde borne du premier inducteur (L11, L51, L71, L91) est connectée électriquement à une première borne du second inducteur (L12, L52, L72, L92) directement ou via la première diode de commande de conversion (B71, B91), la première borne du premier condensateur (C11, C51, C71, C91) est connectée à la première borne du second inducteur (L12, L52, L72, L92), et une seconde borne du second inducteur (L12, L52, L72, L92) est connectée électriquement à une première borne du second condensateur (C12, C52, C72, C92) directement ou via une deuxième diode de commande de conversion (B52, B72) ; et
   un commutateur commun (Q1, Q5, Q7, Q9) connecté électriquement à la première unité de conversion de puissance (VT11, VT51, VT71, VT91) et à la seconde unité de conversion de puissance (VT12, VT52, VT72, VT92), dans lequel le système de convertisseur de puissance est configuré pour être utilisable uniquement par l'actionnement du commutateur commun (Q1, Q5, Q7, Q9), et quand le commutateur commun (Q1, Q5, Q7, Q9) est mis en conduction, la première unité de conversion de puissance (VT11, VT51, VT71, VT91) et la seconde unité de conversion de puissance (VT12, VT52, VT72, VT92) réalisent une procédure de conversion de puissance à deux étages avec une séquence temporelle identique et en phase,
   dans lequel soit
   une première borne du commutateur commun (Q1) est connectée électriquement à une seconde borne du premier condensateur (C11) via une première diode de commande de charge (A12), la seconde borne du premier condensateur (C11) est connectée électriquement à une seconde borne du commutateur commun (Q1) via une seconde diode de commande de charge (A11), et la seconde borne du commutateur commun (Q1) est connectée électriquement à une seconde borne du second condensateur (C12), soit une première borne du commutateur commun (Q5) est connectée électriquement à une seconde borne du premier condensateur (C51) via une première diode de commande de charge (A51), la seconde borne du premier condensateur (C51) est connectée électriquement à une seconde borne du commutateur commun (Q5) via une deuxième diode de commande de charge (A52), et la seconde borne du commutateur commun (Q5) est connectée électriquement à la seconde borne du second inducteur (L52), soit une seconde borne du premier condensateur (C71) et une seconde borne du second condensateur (C72) sont connectées électriquement à une première borne du commutateur commun (Q7), et la seconde borne du premier inducteur (L71) est connectée électriquement à une seconde borne du commutateur commun (Q7) via une diode de commande de charge (A71), soit une première borne du commutateur commun (Q9) est connectée électriquement à une seconde borne du premier condensateur (C91), une seconde borne du commutateur commun (Q9) est connectée électriquement à une seconde borne du second condensateur (C92), et la seconde borne du premier inducteur (L91) est connectée électriquement à la seconde borne du commutateur commun (Q9) via une diode de commande de charge (A91),

**caractérisé en ce que**

le premier inducteur (L11, L51, L71, L91) et le second inducteur (L12, L52, L72, L92) sont intégrés comme un inducteur couplé à deux étages, et l'inducteur couplé à deux étages comprend :

une première structure (ST1) comprenant :

    un premier cylindre (CY1) ;
    un deuxième cylindre (CY2) ; et
    un troisième cylindre (CY3) interposé entre le premier cylindre (CY1) et le deuxième cylindre (CY2) ;
    une seconde structure (ST2) comprenant :

        un quatrième cylindre (CY4) ;
        un cinquième cylindre (CY5) ; et
        un sixième cylindre (CY6) interposé entre le quatrième cylindre (CY4) et le cinquième cylindre (CY5), dans lequel la première structure (ST1) et la seconde structure (ST2) sont disposées de manière opposée, de manière que le premier cylindre (CY1) et le quatrième cylindre (CY4) soient séparés par un premier intervalle (G1), le deuxième cylindre (CY2) et le cinquième cylindre (CY5) soient séparés par un deuxième intervalle (G2), et le troisième cylindre (CY3) et le sixième cylindre (CY6) soient séparés par un troisième intervalle (G3) ;
        une première bobine (CO1) enroulée sur le premier cylindre (CY1) et le quatrième cylindre (CY4) ; et
        une seconde bobine (CO2) enroulée sur le deuxième cylindre (CY2) et le cinquième cylindre (CY5) ;
        dans lequel la première structure (ST1) a un aspect en forme de E et la seconde structure (ST2) a un aspect en forme de E.

2. Système de convertisseur de puissance (100) selon la revendication 1, dans lequel la première unité de conversion de puissance (VT11) est une unité de dévoltage, la seconde unité de conversion de puissance (VT12) est une unité de dévoltage.

3. Système de convertisseur de puissance (500) selon la revendication 1, dans lequel la première unité de conversion de puissance (VT51) est une unité de dévoltage, la seconde unité de conversion de puissance (VT52) est une unité de survoltage.

4. Système de convertisseur de puissance (700) selon la revendication 1, dans lequel la première unité de conversion de puissance (VT71) est une unité de survoltage, la seconde unité de conversion de puissance (VT72) est une unité de survoltage.

5. Système de convertisseur de puissance (900) selon la revendication 1, dans lequel la première unité de conversion de puissance (VT91) est une unité de survoltage, la seconde unité de conversion de puissance (VT92) est une unité de dévoltage.

6. Système de convertisseur de puissance (100) selon la revendication 1, dans lequel la première unité de conversion de puissance (VT11) est une unité de dévoltage, la seconde unité de conversion de puissance (VT12) est une unité de dévoltage, et deux diodes de commande de conversion (B11, B12) sont connectées électriquement respectivement à une extrémité d'entrée du premier inducteur (L11) et une extrémité d'entrée du second inducteur (L12).

7. Système de convertisseur de puissance (500) selon la revendication 1, dans lequel la première unité de conversion de puissance (VT51) est une unité de dévoltage, la seconde unité de conversion de puissance (VT52) est une unité de survoltage, et une diode de commande de conversion (B51) est connectée électriquement à une extrémité d'entrée du premier inducteur (L51) et la deuxième diode de commande de conversion (B52) est connectée entre la seconde borne du second inducteur et la première borne du second condensateur.

**8.** Système de convertisseur de puissance (900) selon la revendication 1, dans lequel la première unité de conversion de puissance (VT91) est une unité de survoltage, la seconde unité de conversion de puissance (VT92) est une unité de dévoltage, et une troisième diode de commande de conversion (B92) est connectée électriquement à une extrémité d'entrée du second inducteur (L92) et la première diode de commande de conversion (B91) est connectée entre la seconde borne du premier inducteur d'un côté et la première borne du premier condensateur et la première borne du second inducteur de l'autre côté.

**9.** Système de convertisseur de puissance (100, 500, 700, 900) selon l'une quelconque des revendications 1 à 8, dans lequel le premier cylindre (CY1), le deuxième cylindre (CY2), le troisième cylindre (CY3), le quatrième cylindre (CY4), le cinquième cylindre (CY5) et le sixième cylindre (CY6) sont tous des cylindres magnétiques.

**10.** Système de convertisseur de puissance (100, 500, 700, 900) selon l'une quelconque des revendications 1 à 9, dans lequel le nombre de spires de la première bobine (CO1) et le nombre de spires de la seconde bobine (CO2) sont différents.

**11.** Système de convertisseur de puissance (100, 500, 700, 900) selon l'une quelconque des revendications 1 à 10, dans lequel les dimensions du premier intervalle (G1), du deuxième intervalle (G2) et du troisième intervalle (G3) sont différentes.

FIG. 1

VT11    VT12

L11  C11    L12  C12

PA11

B11

A12

A11

B12

PA12

Q1

# FIG. 2A

VT11    VT12

L11  C11    L12  C12

PB11

B11

A12

A11

B12

PB12

Q1

# FIG. 2B

FIG. 2C

FIG. 2D

LB

ST2

CY4     CY6     CY5

G2

N1     G1     N2

CO1     G3     CO2

CY1     CY3     CY2

ST1

# FIG. 3A

R1     R3     R2

$\psi 1$     $\psi 3$     $\psi 2$

# FIG. 3B

FIG. 4

FIG. 5

FIG. 6A

FIG. 6B

FIG. 6C

FIG. 6D

700

FIG. 7

FIG. 8A

FIG. 8B

FIG. 8C

FIG. 8D

FIG. 9

FIG. 10A

FIG. 10B

FIG. 10C

FIG. 10D

FIG. 11A

EP 3 644 487 B1

FIG. 11B

**EP 3 644 487 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104753335 A